# EUROPEAN PATENT SPECIFICATION

(11) **EP 4 194 226 B1**
(45) Date of publication and mention of the grant of the patent: **01.07.2026**
(21) Application number: 22020606.4
(22) Date of filing: 09.12.2022
(51) Int. Cl.: B60C 1/00, C08C 19/25, C08F 236/06

(54) **METHODS OF MANUFACTURING CONJUGATED DIENE-BASED POLYMERS AND THE POLYMERS, RUBBERS AND TIRES MADE THEREFROM**
VERFAHREN ZUR HERSTELLUNG VON POLYMEREN AUF DER BASIS VON KONJUGIERTEN DIENEN UND DARAUS HERGESTELLTE POLYMERE, KAUTSCHUKE UND REIFEN
PROCÉDÉS DE FABRICATION DE POLYMÈRES À BASE DE DIÈNE CONJUGUÉ ET POLYMÈRES, CAOUTCHOUCS ET PNEUS FABRIQUÉS À PARTIR DE CEUX-CI

(30) Priority: 10.12.2021 US 202163288240 P
(43) Date of publication of application: 14.06.2023
(73) Proprietor: TSRC Corporation, Kaohsiung City 815 (TW)
(72) Inventor: Chen, Chun-Lin, 815 Kaohsiung City (TW); Shen, Yi-Ting, 815 Kaohsiung City (TW); Lee, I-Tsun, 815 Kaohsiung City (TW)
(74) Representative: Flaccus, Rolf-Dieter

(56) References cited:
- EP-A2- 0 083 576
- RU-C2- 2 206 581
- US-A- 5 750 055

## Description

### BACKGROUND OF THE INVENTION

### FIELD OF THE INVENTION

The present invention relates to a method of manufacturing conjugated diene-based polymers and the polymers therefrom, a rubber containing the conjugated diene-based polymers, and a tire containing the rubber.

### DESCRIPTION OF THE PRIOR ART

Solution styrene butadiene rubber (SSBR) is conjugated diene polymers composed of butadiene monomers and styrene monomers. A batch process of manufacturing SSBR was first proposed by Phillips Company (U.S.A.), and a continuous process of manufacturing SSBR was proposed by Firestone Tire and Rubber Company, which took the lead in industrial production. Since SSBR has better mechanical properties and rolling resistance than emulsion styrene butadiene rubber (ESBR), it can be widely used in the automotive industry and other rubber products. In order to make rubber materials have better properties, the industry continuously strive to improve the properties of conjugated diene polymers.

US 8946339 B2 and EP 2338919 B1 provide a modified conjugated diene-based polymer having a silyl group substituted with one or more alkoxy groups, and one or more nitrogen atoms on the chain ends of a conjugated diene-based polymer. The modified conjugated diene-based polymer is obtained by reacting a living polymer end of the conjugated diene-based polymer with a compound having a silyl group substituted with two or more alkoxy groups and one or more nitrogen atoms. The conjugated diene-based polymer is obtained by polymerizing a conjugated diene compound, or copolymerizing a conjugated diene compound with an aromatic vinyl compound, by using a polyfunctional anionic polymerization initiator. The polyfunctional anionic polymerization initiator is prepared from a polyvinyl aromatic compound and an organolithium compound in a range of molar ratio (which means the polyvinyl aromatic compound / the organolithium compound) of 0.05 to 1.0.

US 6221975 B1 provides a process for preparing random copolymer functionalized at both terminals, comprising synthesizing a random copolymer derived from an aromatic vinyl monomer and conjugated diene monomer at only one terminal of two anionic terminals of a difunctional organo-lithium initiator in the presence of a non-polar hydrocarbon solvent; followed by adding a polar additive and an electrophilic material to the living polymer to obtain a polymer functionalized at both terminals.

US 6455651 provides a method of anionically polymerizing monomers, comprising contacting the monomers with a functionally anionic polymerization initiator (which is an organo-substituted alkali metal compound). The improvement comprises adding from 0.1 to 1.0 equivalents of a metal alkyl compound per equivalent of alkali metal compound wherein alkyl groups of the metal alkyl compound are chosen so that they will not exchange with the organo substituents of the alkali metal compound. The organo substituents of the alkali metal compound are aliphatic, alicyclic, aromatic, or alkyl-substituted aromatics.

US 6562923 provides a process for the preparation of a dilithiated initiator usable in anionic polymerization, comprising reacting a dialkenyl benzene bearing two double bonds with secondary butyllithium in the presence of a diamine, in an aliphatic or alicyclic hydrocarbon solvent, such that the ratio of the number of moles of the dialkenyl benzene to the number of moles of secondary butyllithium is substantially equal to 0.5, so that the initiator obtained is a bi-adduct resulting from the addition of a molecule of secondary butyllithium to each of the two double bonds in the dialkenyl benzene.

The bifunctional organolithium initiator with anion terminal disclosed in the above prior art has a molar ratio of divinylarene to organic alkali metal in the range of 0.05 to 1.0, and the conjugated diene-based polymers obtained by polymerization are used for preparation of rubber. Rubber has many defects such as low rolling resistance, which leads to poorer grip, low tensile strength and tear strength, which lead to poor deformation resistance, low stiffness, and poor wear resistance. The mechanical properties required for the automotive industry and other rubber products are obviously insufficient, which is a problem that the industry is eager to improve.

US 5 750 055 A describes a process for the preparation of an efficient industrial organolithium diinitiator, comprising the reaction of two equivalents of a mono-organolithium initiator with one equivalent of 1,3-diisopropenyl benzene in an apolar hydrocarbon solvent, and in the presence of a monofunctional tertiary amine, followed by addition to the reaction mixture of a small amount of conjugated diene monomer to form a solution of an α,ω-dilithio poly(conjugated diene).

EP 0 083 576 A2 describes a process for the preparation of thermoplastic block polymers which comprises contacting conjugated diolefinic monomers mixed with at least one polyvinyl aromatic coupling compound under solution polymerization conditions with a polystyryllithium catalyst which has been prepared by reacting an alkyllithium compound with a styrene monomer.

### SUMMARY OF THE INVENTION

In view of the above, the present invention provides a method of manufacturing conjugated diene-based polymers. In the method, an initiator was obtained by the reaction of a divinylarene-like compound with an organic alkali metal. The inventors of the present invention surprisingly found that the rubber produced by the method of the present invention with the molar ratio of the divinylarene-like compound to the effective active organic alkali metal being 1.3-5.0 has significantly better rolling resistance, the product of tensile strength at break and elongation strength at break, tear strength, and rigidity than the rubber produced by a method without a divinylarene-like compound or with an insufficient amount of the divinylarene-like compound.

In one aspect, the present invention provides a method of manufacturing conjugated diene-based polymers, comprising: step (a): reacting a divinylarene-like compound represented by formula (1) with an organic alkali metal to obtain an initiator, wherein A and B are CₙH₂ₙ₊₁ or an aromatic ring, n is 0~5, A and B can be the same or different, Q is an aromatic ring, and wherein the molar ratio of the divinylarene-like compound to the effective active organic alkali metal is 1.3~5.0; and 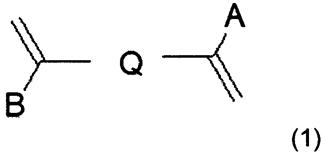 step (b): polymerizing conjugated diene monomers or conjugated diene monomers and vinyl aromatic monomers using the initiator.

In another aspect, the present invention provides conjugated diene-based polymers, which are obtained by the aforementioned manufacturing method.

In yet another aspect, the present invention provides a rubber comprising the aforementioned conjugated diene-based polymers.

In yet another aspect, the present invention provides a tire comprising the aforementioned rubber.

### DETAILED DESCRIPTION OF THE EMBODIMENTS

In order to fully understand the present invention and its claims, preferred embodiments of the present invention are exemplified below. In order to avoid obscuring the content of the present invention, the following description may omit known components, related materials, and related processing techniques. The following descriptions are only preferred embodiments of the present invention, and are not intended to limit the claim scope of the present invention. All other equivalent changes or modifications that do not deviate from the spirit disclosed in the present invention should be included in the following within the scope of the patent application.

### Methods of manufacturing conjugated diene-based polymers

The present invention provides a method of manufacturing conjugated diene-based polymers, which uses anion polymerization to obtain conjugated diene-based polymers. The so-called anionic polymerization refers to using an initiator to form an living carbanion, and after adding monomers, addition polymerizing the monomers with the living carbanion to form a polymer with a negative charge at the end of the molecular chain, and then adding a terminator to terminate the reaction. The polymer is obtained preferably by a batch adiabatic process. The aforementioned manufacturing method includes:
Step (a): reacting a divinylarene-like compound represented by formula (1) with an organic alkali metal to obtain an initiator, wherein A and B are CₙH₂ₙ₊₁ or an aromatic ring, n is 0~5, A and B can be the same or different, Q is an aromatic ring, and wherein the molar ratio of the divinylarene-like compound to the effective active organic alkali metal is 1.3~5.0; and 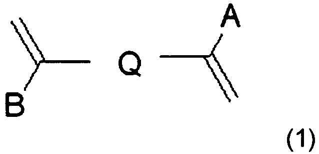
Step (b): polymerizing conjugated diene monomers or conjugated diene monomers and vinyl aromatic monomers using the initiator to obtain the conjugated diene-based polymers. The conjugated diene-based polymers may be a block copolymer or a random copolymer.

The substituents A, B and/or Q of the divinylarene-like compounds may be aromatic rings, including substituted or unsubstituted monocyclic, polycyclic or fused polycyclic rings, for example, independently selected from the group consisting of: substituted or unsubstituted benzene, naphthalene, anthracene, phenanthrene, fluorene, naphthacene, pyrene, biphenyl, terphenyl, quaterphenyl, fennel, terphenyl, perylene, indene, and any combination thereof or combined fused rings. The substituents are preferably benzene. The divinylarene-like compounds, for example, may be independently selected from the group consisting of m-divinylbenzene, p-divinylbenzene, 1,2-diisopropenylbenzene, 1,3-diisopropenylbenzene, 1,4-diisopropenylbenzene, 1,3-divinylnaphthalene, 1,8-divinylnaphthalene, 1,4-divinylnaphthalene, 1,5- Divinylnaphthalene, 2,3-divinylnaphthalene, 2,7-divinylnaphthalene, 2,6-vinylnaphthalene, 4,4'-divinylbiphenyl, 4,3'-divinylbiphenyl, 4,2'-divinylbiphenyl, 3,2'-divinylbiphenyl, 3,3'-divinylbiphenyl, 2,2'-divinylbiphenyl, 2,4- divinylbiphenyl, 1,2-divinyl-3,4-dimethylbenzene, 1,3-divinyl-4,5,8-tributylnaphthalene, 2,2'-divinyl-4-ethyl-4'-propylbiphenyl, and any combination thereof. The divinylarene-like compounds are preferably 1,3-diisopropenylbenzene or p-divinylbenzene.

The mole number of effective active organic alkali metal refers to the mole number of organic alkali metal participating in the reaction, rather than the molar number of organic alkali metal added to the reactor. The mole number can be obtained by gel permeation chromatography (GPC).

Organic alkali metals include monoorganic lithium compound, such as methyllithium, ethyllithium, n-propyllithium, isopropyllithium, n-butyllithium, sec-butyllithium, tert-butyllithium, isobutyllithium, n-pentyllithium, n-hexyllithium, benzyllithium, phenyllithium, tolyllithium and all isomers thereof, naphthyllithium, stilbenelithium; 1,4-dilithium butane, 1,5-dilithium pentane, 1,2-dilithium diphenylethane, 1,4-dilithium-1,1,4,4-tetraphenylbutane, 1,3- or 1,4-bis(1-lithium-3-methylpentyl)benzene, naphthalene dilithium, dilithium hexylbenzene, 1,4-dilithium-2-ethylcyclohexane, 1,3,5-trilithiumbenzene, 1,3,5-tris(lithiomethyl)benzene; organic sodium compounds, such as naphthyl sodium; organic potassium compounds, such as naphthyl potassium and potassium ethoxide; compounds with nitrogen-lithium bonds (metal amide compounds), such as lithium dimethylamide, lithium dihexylamide, lithium diisopropylamide, and lithium hexamethyleneimide. The metal amide compound is preferably a reaction product of a lithium compound such as alkyllithium or aromatic lithium and a secondary amine compound. Examples of the secondary amine compound include dimethylamine, diethylamine, dipropylamine, dibutylamine, dihexylamine, dibenzylamine, dodecamethyleneimine, N,N'-Dimethyl-N'-trimethylsilyl-1,6-diaminohexane, piperidine, pyrrolidine, Hexamethyleneimine, Heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, 1,3-bistrimethylsilyl-1,3,5-triazinane, etc. Examples of organic alkaline earth metal compounds include di-n-butylmagnesium, di-n-hexyl magnesium, diethoxy calcium, calcium stearate, calcium distearate, di-tert-butoxy strontium, diethoxy barium, barium diisopropoxide, diethyl mercapto barium, barium di-tert-butoxide, barium diphenoxide, barium distearate, and diketyl barium, etc. These polymerization initiators can be used individually or in combination of two or more types. The initiator is preferably a lithium compound. The lithium compound is preferably n-butyllithium and sec-butyllithium.

Conjugated diene monomers may be conjugated dienes with 4 to 12 carbon atoms. Specific examples of conjugated diene monomers include: 1,3-butadiene, 1,3-pentadiene, 1,3-hexadiene , 1,3-heptadiene, 2-methyl-1,3-butadiene (isoprene), 2-methyl-1,3-pentadiene, 2-hexyl-1,3-butadiene diene, 2-phenyl-1,3-butadiene, 2-phenyl-1,3-pentadiene, 2-p-tolyl-1,3-butadiene, 2-benzyl-1,3-butadiene, 3-methyl-1,3-pentadiene, 3-methyl-1,3-hexadiene, 3-butyl-1, 3-octadiene, 3-phenyl-1,3-pentadiene, 4-methyl-1,3-pentadiene, 1,4-diphenyl-1,3-butadiene, 2,3-dimethyl-1,3-butadiene, 2,3-dimethyl-1,3-pentadiene, 2,3-dibenzyl-1,3-butadiene, 4,5-diethyl-1,3-octadiene, myrcene, and any combination thereof. The conjugated diene monomers are preferably 1,3-butadiene and isoprene.

Specific examples of vinyl aromatic monomers suitable for use in the present invention include: styrene, methylstyrene and all isomers thereof, ethylstyrene and all isomers thereof, tert-Butylstyrene and all isomers thereof, dimethylstyrene and all isomers thereof, methoxystyrene and all isomers thereof, cyclohexylstyrene and all isomers thereof, vinyl biphenyl, 1-vinyl-5-hexylnaphthalene, vinyl naphthalene, vinyl anthracene, 2,4-diisopropylstyrene, 5-tert-butyl-2-methylstyrene, divinylbenzene, trivinylbenzene, divinylnaphthalene, tert-butoxystyrene, 4-propylstyrene, 4-dodecylstyrene, 2-ethyl-4-benzylstyrene, 4-(phenylbutyl)styrene, N-4-vinylphenyl-N,N-dimethylamine, (4-vinylphenyl) dimethylaminoethyl ether, N,N-Dimethylaminomethylstyrene, N,N-Dimethylaminoethylstyrene, N,N-diethylaminomethylstyrene, N,N-diethylaminoethylstyrene, vinylxylene, vinylpyridine, diphenylethylene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, indene, diphenylethylene containing tertiary amino groups, such as 1-(4-N,N-dimethylaminophenyl)-1-phenylethene, and any combination of thereof. Vinyl aromatic monomers suitable for use in the present invention are preferably styrene or methylstyrene and all isomers thereof.

Regarding step (a), in one embodiment, the divinylarene-like compound and the organic alkali metal are mixed in a solvent for reaction. A suitable solvent for the polymerization reaction is an inactive organic solvent. The inactive organic solvent refers to solvent not participating in polymerization. Such solvents include aliphatic hydrocarbons, such as n-butane, isobutane, n-pentane, isopentane, 2,2,4-trimethylpentane, isohexane, n-hexane, isoheptane , n-heptane, isooctane, n-octane, and n-decane; or cycloalkane compounds, such as cyclohexane, methylcyclohexane, ethylcyclohexane, cyclopentane, cycloheptane, methylcyclopentane, and methylcycloheptane; or aromatic hydrocarbon compounds, such as benzene, toluene, xylene, ethylbenzene, diethylbenzene, and propylbenzene. These inactive organic solvents may be used individually or in combination of two or more types. The inactive organic solvent is preferably cyclohexane. In another embodiment, after a part of the divinylarene-like compound is reacted with the organic alkali metal for a period of time, the remaining part of the divinylarene-like compound is added to continue the reaction for another period of time. In another embodiment, the concentration of the divinylarene-like compound in the solvent is 0.001-20 wt%. In another embodiment, the reaction temperature is 0-60°C, preferably a raising temperature to 55°C ~ 60°C. The temperature may be controlled by adiabatic reaction, constant temperature control, or partial cooling.

In general, when an inactive organic solvent is used as the only solvent, the polymerization rate of the vinyl aromatic monomer is quite different from the polymerization rate of the conjugated diene monomer. The difference can be overcome by adding a polar solvent in step (b). In one embodiment, cyclic ethers and/or diether compounds can be added, and the cyclic ethers may be monocyclic ethers or bicyclic ethers. For example, the monocyclic ethers may be independently selected from the group consisting of: tetrahydrofuran, furan, tetrahydropyran, 2-methyl-tetrahydropyran, 3-methyl-tetrahydropyran, crown ethers (such as 12-crown-4 ether), 15-crown-5 ether, or 18-crown-6 ether, 1,4-dioxane and any combination thereof. The bicyclic ethers may be 2,2-bis(2-tetrahydrofuryl)propane. The diethers may be independently selected from the group consisting of: diethyl ether, di-n-propyl ether, di-n-butyl ether, ethylene glycol dibutyl ether, ethylene glycol diethyl ether, ethylene glycol dimethyl ether, diethylene glycol dibutyl ether, diethylene glycol diethyl ether, diethylene glycol dimethyl ether, methyl n-propyl Ether, diisopropyl ether, tertiary amyl ethyl ether, methyl tertiary butyl ether or ethyl tertiary butyl ether, and any combination thereof. The polar solvent is preferably tetrahydrofuran, diethyl ether, ethylene glycol dimethyl ether, and ethylene glycol diethyl ether. In another embodiment, the cyclic ether and/or diether compound may be added to mix with the divinylarene-like compound before adding the organic alkali metal in step (a).

In one embodiment, the method of manufacturing conjugated diene-based polymers of the present invention further includes step (c): adding a silicon-containing modifier after step (b). The purpose of adding the silicon-containing modifier is to increase the interaction between the conjugated diene-based polymers and various additives through covalent bonds, hydrogen bonds and other bonding forces or van der Waals forces. The silicon-containing modifier has a monosilane structure, and can be combined with the conjugated diene-based polymers through one or more of the four covalent bond positions on the silicon-containing modifier itself reacting with organic alkali metals. The molar ratio of the silicon-containing modifier to the effective active organic alkali metal is 1.3-5.0, preferably 1.4-3.5, more preferably 1.5-2.5.

The structure of the silicon-containing modifier is shown as formula (2): 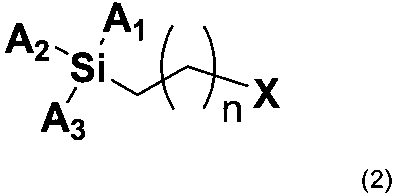 wherein A₁, A₂ and A₃ are alkanes, alkoxys or halogens, the carbon number of alkanes or alkoxys is C1-C5, at least two of A₁, A₂ and A₃ are alkoxys or halogens, X is a group containing at least one of nitrogen, oxygen, sulfur, and phosphorus atoms, and n is 1-10. The silicon-containing modifier is preferably 4-{3-[dimethoxy(methyl)silyl]propyl}morpholine or 3-(trimethoxysilyl)-N,N-dimethylpropan-1-amine.

### Conjugated diene-based polymers

The present invention also provides conjugated diene-based polymers obtained by using the method of manufacturing conjugated diene-based polymers of the present invention. According to various embodiments of the present invention, the Mooney viscosity of the conjugated diene-based polymers is in the range of 20-100, preferably 30~75, more preferably 30-65. The range of the glass transition temperature of the conjugated diene-based polymers is -15 ~ -70°C, preferably -20 ~ -65°C.

According to various embodiments of the present invention, the conjugated diene-based polymers are measured by gel permeation chromatography (GPC) and have m peaks (m is greater than or equal to 1), and the first peak (Mi), which refers to the lowest weight-average molecular weight, is 5×10⁴ to 150×10⁴ g/mole, preferably 10×10⁴ to 150×10⁴ g/mole, more preferably 15×10⁴ to 150×10⁴ g/mole.

According to various embodiments of the present invention, the weight-average molecular weight of the conjugated diene-based polymers is 15×10⁴ to 200×10⁴ g/mole, preferably 20×10⁴ to 180×10⁴ g/mole, and more preferably 25×10⁴ to 180×10⁴ g/mole.

### Applications of conjugated diene-based polymers

The present invention also provides a rubber obtained by mixing the conjugated diene-based polymers of the present invention with other components. Specific examples of the other ingredients include emulsion polystyrene-butadiene copolymer, polybutadiene rubber, butadiene-isoprene copolymers, and butyl rubber. In one embodiment, the other ingredients further include natural rubber, ethylenepropylene copolymer and ethylene-octene copolymer. The above compositions may be used in admixture of two or more types. The composition of the rubber may be such that when the total amount of all components is 100 parts by weight, the content of the conjugated diene-based polymers is preferably at least 10 parts by weight, and more preferably at least 20 parts by weight.

Furthermore, the rubber of the present invention may also contain additives. Specific examples of additives include vulcanizing agents, such as sulfur; vulcanization accelerators, such as thiazole-based vulcanization accelerators, thiuram-based vulcanization accelerators, or sulfenamide-based vulcanization accelerators; vulcanization activators, such as stearic acid or zinc oxide; organic peroxides; reinforcing agents, such as white smoke or carbon black; fillers, such as calcium carbonate or talc; silane coupling agents; extender oils; processing aids; antioxidants; and lubricants, etc. In one embodiment, the additive further includes at least one or a combination of silicon dioxide, extender oil, antioxidant, stearic acid, wax, vulcanization accelerator, processing accelerator, and carbon black.

The rubber of the present invention can be obtained by mixing the conjugated diene-based polymers of the present invention with other components and/or additives, and all the components may be kneaded by using a known mixer, such as a roller, a Banbury mixer, or an internal mixer. Regarding the kneading conditions, when mixing additives other than vulcanizing agent or vulcanization accelerator, the kneading temperature is usually 50°C to 200°C, preferably 80°C to 150°C, and the kneading time is usually 30 seconds to 30 minutes , preferably 1 minute to 30 minutes. When the vulcanizing agent or vulcanization accelerator is mixed, the kneading temperature is usually not more than 100°C, preferably 25°C to 90°C. A vulcanizing agent or a vulcanization accelerator can be mixed in the composition by vulcanization, such as press vulcanization, and the vulcanization temperature is usually 120°C to 200°C, preferably 140°C to 180°C.

The rubber of the present invention can be used in tires, shoe soles, flooring materials, and vibration-insulating materials, and is particularly suitable for use in tires to improve the low rolling resistance of the tire tread and promote the wet-skid resistance so that the handling stability and reliability are enhanced.

The method of manufacturing conjugated diene-based polymers of the present invention and the obtained conjugated diene-based polymers, especially the method of manufacturing styrene-butadiene copolymers and the obtained styrene-butadiene copolymers, are described in detail by the following examples.

### EXAMPLE 1

### Example 1-1

Pre-initiation reaction: One (1) g of 1,3-diisopropenylbenzene was added to 20 g of cyclohexane solution containing 1 g of tetrahydrofuran and 0.25 g of ethylene glycol diethyl ether at room temperature (27°C), and then 15 g of n-butyllithium (5wt% cyclohexane solution) was added in the mixture to react for 30 minutes to obtain the initiator. The initator was stored in the cooling environment at 4°C.

Polymerization: The initiator obtained from the pre-initiation reaction and 0.2 g of 1,3-diisopropenylbenzene were mixed in 5525 g of cyclohexane, and 10 g of tetrahydrofuran and 2.5 g of ethylene glycol diethyl ether were added to react for 15 minutes. Then, 665 g of 1,3-butadiene and 200 g of styrene were added for polymerization. Fifteen (15) minutes after the polymerization temperature reached 60°C, 35 g of 1,3-butadiene were added to react for 5 minutes. Then, 1.4 g of 4-{3-[dimethoxy(methyl)silyl]propyl}morphine were added to react for 30 minutes, and finally 0.5 gram of methanol were added to terminate the reaction.

Example 1-2 and Example 1-3 had the same reaction steps as Example 1-1, with the only difference being the addition amount of 1,3-diisopropenylbenzene and 4-{3-[dimethoxy(methyl)silyl]propyl}morpholine. More specifically, in Example 1-2, the addition amount of 1,3-diisopropenylbenzene in the pre-initiation stage and in the polymerization stage was 1 g and 0.7 g, respectively; the addition amount of 4-{3-[dimethoxy(methyl)silyl]propyl} morpholine was 1.5 g. In Example 1-3, the addition amount of 1,3-diisopropenylbenzene in the pre-initiation stage and in the polymerization stage was 1 g and 0.4 g, respectively; the addition amount of 4-{3-[dimethoxy(methyl)silyl]propyl}morpholine was 1.1 g.

The benefit of Example 1 is that the initiator can be pre-made, stored in the cooling environment, and used for polymerization later; therefore, during polymerization, the reaction time of 1,3-diisopropenylbenzene mixed in the cyclohexane solution is shorter and the yield increases.

### EXAMPLE 2

The difference between Example 2 and Example 1 is that in Example 2, polymerization was carried out immediately after the preparation of the initiator, whereas in Example 1, the initiator was stored in the cooling environment for later use.

### Example 2-1

At room temperature (27 °C), 0.8 g of 1,3-diisopropenylbenzene was mixed in 5525 g of cyclohexane solution containing 10 g of tetrahydrofuran and 2.5 g of ethylene glycol diethyl ether, and then 20 g of n-butyllithium (5wt% cyclohexane solution) was added in the mixture to react for 60 minutes. After that, 665 g of 1,3-butadiene and 200 g of styrene were added for polymerization. Fifteen (15) minutes after the polymerization temperature reached 60°C, 35 g of 1,3-butadiene were added to react for 5 minutes. Then, 1.6 g of 4-{3-[dimethoxy(methyl)silyl]propyl}morphine were added to react for 30 minutes, and finally 0.5 g of methanol were added to terminate the reaction.

Example 2-2 to Example 2-7 had the same reaction steps as Example 2-1, with the only difference being the addition amount of 1,3-diisopropenylbenzene and 4-{3-[dimethoxy(methyl)silyl]propyl}morpholine. More specifically, in Example 2-2, the addition amount of 1,3-diisopropenylbenzene and 4-{3-[dimethoxy(methyl)silyl]propyl}morpholine was 1.2 g and 1.5 g, respectively. In Example 2-3, the addition amount of 1,3-diisopropenylbenzene and 4-{3-[dimethoxy(methyl)silyl]propyl}morpholine was 1.35 g and 1.7 g, respectively. In Example 2-4, the addition amount of 1,3-diisopropenylbenzene and 4-{3-[dimethoxy(methyl)silyl]propyl}morpholine was 1.8 g and 1.6 g, respectively. In Example 2-5, the addition amount of 1,3-diisopropenylbenzene and 4-{3-[dimethoxy(methyl)silyl] propyl}morpholine was 1.9 g and 1.5 g, respectively. In Example 2-6, the addition amount of 1,3-diisopropenylbenzene and 4-{3-[dimethoxy(methyl)silyl]propyl}morpholine was 1.8 g and 3.5 g, respectively. In Example 2-7, the addition amount of 1,3-diisopropenylbenzene and 4-{3-[dimethoxy(methyl)silyl]propyl}morpholine was 1 g and 2.4 g, respectively.

### EXAMPLE 3

### Example 3-1

At room temperature (27 °C), 1 g of 1,3-diisopropenylbenzene was mixed in 5525 g of cyclohexane solution containing 10 g of tetrahydrofuran and 0.2 g of ethylene glycol diethyl ether. After the temperature was raised to 55°C, 20 g of n-butyllithium (5wt% cyclohexane solution) was added in the mixture to react for 30 minutes. After that, 780 g of 1,3-butadiene and 90 g of styrene were added for polymerization. Fifteen (15) minutes after the polymerization temperature reached 60°C, 30 g of 1,3-butadiene were added to react for 5 minutes. Then, 1.1 g of 4-{3-[dimethoxy(methyl)silyl]propyl}morphine were added to react for 30 minutes, and finally 0.5 g of methanol were added to terminate the reaction.

Example 3-2 and Example 3-3 had the same reaction steps as Example 3-1, with the only difference being the addition amount of 1,3-diisopropenylbenzene and 4-{3-[dimethoxy(methyl)silyl]propyl}morpholine. More specifically, in Example 3-2, the addition amount of 1,3-diisopropenylbenzene and 4-{3-[dimethoxy(methyl)silyl]propyl}morpholine was 1 g and 1.7 g, respectively. In Example 3-3, the addition amount of 1,3-diisopropenylbenzene and 4-{3-[dimethoxy(methyl)silyl]propyl}morpholine was 1.2 g and 1.3 g, respectively.

The benefits of Example 3 are that the reaction time of n-butyllithium was reduced during the preparation of the initiator by increasing the temperature to 55°C, and conjugated diene-based polymers with lower glass transition temperature was obtained by reducing the amount of ethylene glycol diethyl ether used.

### Comparative Example 1

The differences between Comparative Example 1 and Example 2 are that for the preparation of initiator, less 1,3-diisopropenylbenzene was added in Comparative Example 1 than that of Example 2; for the polymerization, no 4-{3-[Dimethoxy(methyl)silyl]propyl} morpholine was added in Comparative Example 1, while 4-{3-[Dimethoxy(methyl)silyl] propyl}morpholine was used in Example 2. More specifically, at room temperature (27 °C), 0.4 g of 1,3-diisopropenylbenzene was mixed in 5525 g of cyclohexane solution containing 10 g of tetrahydrofuran and 2.5 g of ethylene glycol diethyl ether, and then 20 g of n-butyllithium (5wt% cyclohexane solution) was added in the mixture to react for 60 minutes. After that, 665 g of 1,3-butadiene and 200 g of styrene were added for polymerization. Fifteen (15) minutes after the polymerization temperature reached 60°C, 35 g of 1,3-butadiene were added to react for 5 minutes, and finally 0.5 g of methanol were added to terminate the reaction.

### Comparative Example 2

The difference between Comparative Example 2 and Example 2 is that for the preparation of the initiator, no 1,3-diisopropenylbenzene was added in Comparative Example 2, while 1,3-diisopropenylbenzene was used in Example 2. More specifically, at room temperature (27 °C), 665 g of 1,3-butadiene and 200 g of styrene were mixed in 5525 g of cyclohexane solution containing 10 g of tetrahydrofuran and 2.5 g of ethylene glycol diethyl ether, and then 20 g of n-butyllithium (5wt% cyclohexane solution) was added in the mixture for polymerization. Fifteen (15) minutes after the polymerization temperature reached 60°C, 35 g of 1,3-butadiene were added to react for 5 minutes. Then, 1.6 g of 4-{3-[dimethoxy(methyl)silyl]propyl}morphine were added to react for 30 minutes, and finally 0.5 g of methanol were added to terminate the reaction.

### Comparative Example 3

The difference between Comparative Example 3 and Example 2 is that for polymerization, less 4-{3-[Dimethoxy(methyl)silyl]propyl}morpholine was added in Comparative Example 3 than that of Example 2. More specifically, at room temperature (27 °C), 1.5 g of 1,3-diisopropenylbenzene was mixed in 5525 g of cyclohexane solution containing 10 g of tetrahydrofuran and 2.5 g of ethylene glycol diethyl ether, and then 20 g of n-butyllithium (5wt% cyclohexane solution) was added in the mixture to react for 60 minutes. After that, 665 g of 1,3-butadiene and 200 g of styrene were added for polymerization. Fifteen (15) minutes after the polymerization temperature reached 60°C, 35 g of 1,3-butadiene were added to react for 5 minutes. Then, 0.4 g of 4-{3-[dimethoxy(methyl)silyl]propyl}morphine were added to react for 30 minutes, and finally 0.5 g of methanol were added to terminate the reaction.

### Comparative Example 4

The difference between Comparative Example 4 and Example 2 is that for the preparation of initiator, less 1,3-diisopropenylbenzene was added in Comparative Example 4 than that of Example 2. More specifically, at room temperature (27 °C), 0.4 g of 1,3-diisopropenylbenzene was mixed in 5525 g of cyclohexane solution containing 10 g of tetrahydrofuran and 2.5 g of ethylene glycol diethyl ether, and then 20 g of n-butyllithium (5wt% cyclohexane solution) was added in the mixture to react for 60 minutes. After that, 665 g of 1,3-butadiene and 200 g of styrene were added for polymerization. Fifteen (15) minutes after the polymerization temperature reached 60°C, 35 g of 1,3-butadiene were added to react for 5 minutes. Then, 1.6 g of 4-{3-[dimethoxy(methyl)silyl]propyl}morphine were added to react for 30 minutes, and finally 0.5 g of methanol were added to terminate the reaction.

### Comparative Example 5

The difference between Comparative Example 5 and Example 3 is that for the preparation of initiator, less 1,3-diisopropenylbenzene was added in Comparative Example 5 than that of Example 3. More specifically, at room temperature (27 °C), 0.4 g of 1,3-diisopropenylbenzene was mixed in 5525 g of cyclohexane solution containing 10 g of tetrahydrofuran and 0.2 g of ethylene glycol diethyl ether. After the temperature was raised to 55°C, 20 g of n-butyllithium (5wt% cyclohexane solution) was added in the mixture to react for 30 minutes. After that, 780 g of 1,3-butadiene and 90 g of styrene were added for polymerization. Fifteen (15) minutes after the polymerization temperature reached 60°C, 30 g of 1,3-butadiene were added to react for 5 minutes. Then, 1.6 g of 4-{3-[dimethoxy(methyl)silyl]propyl}morphine were added to react for 30 minutes, and finally 0.5 g of methanol were added to terminate the reaction.

The following describes the method for further making rubber test pieces from the conjugated diene-based polymers obtained from the above-mentioned examples and comparative examples of the present invention for tests of the mechanical properties of the test pieces.

Seventy (70) parts by weight of the conjugated diene-based polymers obtained from each example and comparative example, 30 parts by weight of polybutadiene rubber (trade name TAIPOL BR0150, TSRC), 70 parts by weight of silicon dioxide, 37.5 parts by weight of extender oil (TDAE, IRPC), 11.2 parts by weight of silane (trade name Si69, EVONIK), 2 parts by weight of stearic acid, 3 parts by weight of zinc oxide, 1 part by weight of antioxidant (trade name Antigene), 1.5 parts by weight sulfur, and 3.3 parts by weight of a vulcanization accelerator (including 1.8 parts by weight of N-cyclohexyl-2-benzothiazole sulfenamide (CBS) and 1.5 parts by weight of 1,3-diphenylguanidine (DPG)) were kneaded to form rubber. The rubber can be molded into a sheet film by two roller machines, and the sheet films were vulcanized (heated to 160 °C for 45 minutes) to obtain a vulcanized sheet film.

Tables 1 to 3 show the composition and physical properties of the conjugated diene-based polymers of each example and comparative example and the mechanical properties of the rubber test pieces prepared therefrom.

### Methods of analyzing conjugated diene-based polymers

The molar ratio of the divinylarene-like compound to the effective active organic alkali metal: The molar ratio is the ratio (Q/M) of the molar number of divinylarene-like compound (Q) to the molar number of the organic alkali metal participating in the reaction (M), where Q is weight of divinylarene-like compound / molecular weight of divinylarene-like compound, M is total weight of monomers added to the reaction / lowest weight-average molecular weight represented by the first peak (Mi), and the first peak (Mi) is obtained by analyzing the conjugated diene-based polymers or the modified conjugated diene-based polymers by gel permeation chromatography (GPC).

The molar ratio of the silicon-containing modifier to the effective active organic alkali metal: The molar ratio is the ratio (Si/M) of the molar number of the silicon-containing modifier (Si) to the molar number of the organic alkali metal participating in the reaction (M), where Si is weight of silicon-containing modifier / molecular weight of silicon-containing modifier, M is total weight of monomers added to the reaction / the lowest weight-average molecular weight represented by the first peak (Mi), and the first peak (Mi) is obtained by analyzing the modified conjugated diene-based polymers by gel permeation chromatography (GPC).

Coupling ratio (CR%): The modified conjugated diene-based polymers have the characteristics of m peaks measured by gel permeation chromatography (GPC), where coupling ratio = [(total integrated area of m peaks - integrated area of the first peak) / total integrated area of m peaks] × 100%. Tetrahydrofuran was used as the mobile phase in the analysis.

Weight-average molecular weight (Mw) and molecular weight distribution (MWD): Mw and MWD were determined by gel permeation chromatography (GPC), where Waters 1525 Binary HPLC Pump and Waters 2414 Refractive Index Detector were used, and tetrahydrofuran was used as eluent with the flow rate of 1 ml/min.

Mooney Viscosity (ML₁₊₄100°C): ALPHA Mooney MV 2000 and the standard test method ASTM D-1646 were used.

Glass transition temperature (Tg, °C): Differential Scanning Calorimeter (DSC) (TA Instrument Q200) was used to determine glass transition temperature with scan speed of 20°C/min, scanning range of -90°C to 100°C, using nitrogen as the purge gas.

### Methods of analyzing rubber test pieces

Loss tangent (tan δ): This index is used to determine rolling resistance (R.R.) of the tread rubber stock made from conjugated diene-based polymers. Strain sweep was used to measure the changes of the storage modulus (G') and loss modulus (G") of the test pieces by using ARES-G2 model (TA instruments) with sample temperature of 60°C, strain scanning range of 0.1%~10%, and strain value of 5.0%. The index was calculated by the equation tan δ = G"/G'.

Tensile strength at break (Tb, Mpa): INSTRON 33R4464 model was used to measure Tb based on the ASTM D412 standard.

Elongation strength at break (Eb, %): INSTRON 33R4464 model was used to measure Eb based on the ASTM D412 standard.

Tear (N/mm): INSTRON 33R4464 model was used to measure tear based on the ASTM D412 standard.

Stiffness (Mpa): Strain sweep was used to measure the storage modulus (G') of the test pieces by using ARES-G2 model (TA instruments) with sample temperature of 60°C, strain scanning range of 0.1 %~10%, and strain value of 5.0%.

Abrasion test (DIN): GT-7012-DN model was used to measure this index based on the ASTM D5963 standard.

It should be noted that the values of the mechanical properties of each rubber test piece shown below are not actual values; instead, the values are reference values showing the comparison of the examples of the present invention with any one of comparative examples (reference value 100).

**Table 1**

| **Composition and physical properties of conjugated diene-based polymers** | | | | | | | |
|---|---|---|---|---|---|---|---|
| | **Comparative Example 1** | **Comparative Example 2** | **Comparative Example 3** | **Comparative Example 4** | **Example 1-1** | **Example 1-2** | **Example 1-3** |
| Butadiene content (%) | 78 | | | | | | |
| Styrene content (%) | 22 | | | | | | |
| Vinyl content (%) | 64 | 65 | 64 | 66 | 65 | 64 | 64 |
| Q/M¹ | 0.5 | - | 2.3 | 0.4 | 1.9 | 2.6 | 2.2 |
| Si/M² | - | 2.3 | 0.5 | 2.3 | 2.0 | 2.2 | 1.6 |
| Mooney Viscosity (ML₁₊₄100°C) | 54 | 64 | 55 | 66 | 47 | 46 | 30 |
| Glass transition temperature (°C) | -24 | -23 | -25 | -21 | -24 | -25 | -25 |

| Mechanical properties of rubber test pieces | | | | | | | |
|---|---|---|---|---|---|---|---|
| Rolling resistance | 63 | 88 | 90 | 100 | 103 | 116 | 117 |
| Tensile strength at break x elongation strength at break | 92 | 100 | 98 | 100 | 109 | 108 | 111 |
| Tear | 100 | 100 | 99 | 100 | 102 | 105 | 102 |
| Stiffness | 82 | 95 | 105 | 100 | 103 | 104 | 106 |

| | | | | | | | |
|---|---|---|---|---|---|---|---|
| ¹ Molar ratio of 1,3-diisopropenylbenzene to effective active n-butyllithium ² Molar ratio of 4-{3-[dimethoxy(methyl)silyl]propyl}morpholine to effective active n-butyllithium | | | | | | | |

Table 1 shows various properties of the conjugated diene-based polymers of Examples 1-1 to 1-3 and the rubber test pieces made therefrom. In Examples 1-1 to 1-3, both 1,3-diisopropenylbenzene and 4-{3-[dimethoxy(methyl)silyl]propyl}morpholine were added, and the Q/M values and Si/M values were both in the range of the present invention (i.e., 1.3 ~ 5.0). In Comparative Example 1, with the addition of 1,3-diisopropenylbenzene and without the addition of 4-{3-[dimethoxy(methyl)silyl]propyl}morpholine, neither of the Q/M value and Si/M value of Comparative Example 1 was in the range of the present invention. In Comparative Example 2, without the addition of 1,3-diisopropenylbenzene and with the addition of 4-{3-[dimethoxy (methyl)silyl]propyl}morpholine, the Si/M value, but not the Q/M value, of Comparative Example 2 was in the range of the present invention. In Comparative Example 3, with the addition of both 1,3-diisopropenylbenzene and 4-{3-[dimethoxy(methyl)silyl]propyl}morpholine, the Q/M value, but not the Si/M value, of Comparative Example 3 was in the range of the present invention. In Comparative Example 4, with the addition of both 1,3-diisopropenylbenzene and 4-{3-[dimethoxy(methyl)silyl]propyl}morpholine, the Si/M value, but not the Q/M value, of Comparative Example 4 was in the range of the present invention. Compared with Comparative Examples 1 to 4, Examples 1-1 to 1-3 all show that the rubber made from the polymers of the present invention has significantly superior mechanical properties, such as rolling resistance, product of tensile strength at break and elongation strength at break, tear, and stiffness without affecting the glass transition temperatures of the polymers.

Based on Comparative Example 2, Comparative Example 4, and Example 1-2, with the addition of only 4-{3-[dimethoxy(methyl)silyl]propyl}morpholine to the extent that the Si/M value was in the range of the present invention (Comparative Example 2), the rubber made therefrom had poor rolling resistance and stiffness. With further addition of 1,3-diisopropenylbenzene (Comparative Example 4), the rubber made therefrom had gradually improved rolling resistance and stiffness. With further addition of 1,3-diisopropenylbenzene to the extent that the Q/M value was in the range of the present invention (Example 1-2), the obtained rubber had significantly superior mechanical properties, such as rolling resistance, product of tensile strength at break and elongation strength at break, tear, and stiffness.

Based on Comparative Example 1, Comparative Example 3, and Examples 1-3, with the addition of only 1,3-diisopropenylbenzene (Comparative Example 1), the rubber made therefrom had poor rolling resistance and stiffness. With further addition of 1,3-diisopropenylbenzene to the extent that the Q/M value was in the range of the present invention (Comparative Example 3), the rubber made therefrom had improved rolling resistance and stiffness. With further addition of 4-{3-[dimethoxy(methyl)silyl]propyl} morpholine to the extent that the Si/M value was in the range of the present invention (Example 1-3), the obtained rubber had significantly superior mechanical properties, such as rolling resistance, product of tensile strength at break and elongation strength at break, tear, and stiffness.

**Table 2**

| Composition and physical properties of conjugated diene-based polymers | | | | | | | |
|---|---|---|---|---|---|---|---|
| | Comparative Example 1 | Comparative Example 2 | Comparative Example 3 | Comparative Example 4 | Example 2-1 | Example 2-2 | Example 2-3 |
| Butadiene content (%) | 78 | | | | | | |
| Styrene content (%) | 22 | | | | | | |
| Vinyl content (%) | 64 | 65 | 64 | 66 | 64 | 64 | 63 |
| Q/M¹ | 0.5 | - | 2.3 | 0.4 | 1.3 | 1.8 | 2.1 |
| Si/M² | - | 2.3 | 0.5 | 2.3 | 2.3 | 2.1 | 2.4 |
| Mooney Viscosity (ML₁₊₄100°C) | 54 | 64 | 55 | 66 | 47 | 47 | 58 |
| Glass transition temperature (°C) | -24 | -23 | -25 | -21 | -24 | -24 | -26 |

| Mechanical properties of rubber test pieces | | | | | | | |
|---|---|---|---|---|---|---|---|
| Rolling resistance | 63 | 88 | 90 | 100 | 110 | 119 | 117 |
| Tensile strength at break x elongation strength at break | 92 | 100 | 98 | 100 | 105 | 101 | 111 |
| Tear | 100 | 100 | 99 | 100 | 105 | 105 | 105 |
| Stiffness | 82 | 95 | 105 | 100 | 106 | 108 | 106 |

| Composition and physical properties of conjugated diene-based polymers | | | | |
|---|---|---|---|---|
| | Example 2-4 | Example 2-5 | Example 2-6 | Example 2-7 |
| Butadiene content (%) | 78 | | | |
| Styrene content (%) | 22 | | | |
| Vinyl content (%) | 64 | 65 | 64 | 63 |
| Q/M¹ | 2.8 | 2.9 | 2.8 | 1.5 |
| Si/M² | 2.3 | 2.2 | 5.0 | 3.5 |
| Mooney Viscosity (ML₁₊₄100°C) | 58 | 44 | 45 | 43 |
| Glass transition temperature (°C) | -24 | -22 | -22 | -22 |

| Mechanical properties of rubber test pieces | | | | |
|---|---|---|---|---|
| Rolling resistance | 113 | 109 | 108 | 108 |
| Tensile strength at break x elongation strength at break | 109 | 108 | 104 | 103 |
| Tear | 107 | 102 | 103 | 101 |
| Stiffness | 106 | 109 | 107 | 106 |

| | | | | |
|---|---|---|---|---|
| ¹ Molar ratio of 1,3-diisopropenylbenzene to effective active n-butyllithium ² Molar ratio of 4-{3-[dimethoxy(methyl)silyl]propyl}morpholine to effective active n-butyllithium | | | | |

Table 2 shows various properties of the conjugated diene-based polymers of Examples 2-1 to 2-7 and the rubber test pieces made therefrom. In Examples 2-1 to 2-7, both 1,3-diisopropenylbenzene and 4-{3-[dimethoxy(methyl)silyl]propyl}morpholine were added, and the Q/M values and Si/M values were both in the range of the present invention (i.e., 1.3 ~ 5.0). In Comparative Example 1, with the addition of 1,3-diisopropenylbenzene and without the addition of 4-{3-[dimethoxy(methyl)silyl]propyl}morpholine, neither of the Q/M value and Si/M value of Comparative Example 1 was in the range of the present invention. In Comparative Example 2, without the addition of 1,3-diisopropenylbenzene and with the addition of 4-{3-[dimethoxy (methyl)silyl]propyl}morpholine, the Si/M value, but not the Q/M value, of Comparative Example 2 was in the range of the present invention. In Comparative Example 3, with the addition of both 1,3-diisopropenylbenzene and 4-{3-[dimethoxy(methyl)silyl]propyl}morpholine, the Q/M value, but not the Si/M value, of Comparative Example 3 was in the range of the present invention. In Comparative Example 4, with the addition of both 1,3-diisopropenylbenzene and 4-{3-[dimethoxy(methyl)silyl]propyl}morpholine, the Si/M value, but not the Q/M value, of Comparative Example 4 was in the range of the present invention. Compared with Comparative Examples 1 to 4, Examples 2-1 to 2-7 all show that the rubber made from the polymers of the present invention has significantly superior mechanical properties, such as rolling resistance, product of tensile strength at break and elongation strength at break, tear, and stiffness without affecting the glass transition temperatures of the polymers.

Based on Comparative Example 2, Comparative Example 4, and Examples 2-1 to 2-5, with the addition of only 4-{3-[dimethoxy(methyl)silyl]propyl}morpholine to the extent that the Si/M value was in the range of the present invention (Comparative Example 2), the rubber made therefrom had poor rolling resistance and stiffness. With further addition of 1,3-diisopropenylbenzene (Comparative Example 4), the rubber made therefrom had gradually improved rolling resistance and stiffness. With further addition of 1,3-diisopropenylbenzene to the extent that the Q/M value was in the range of the present invention (Examples 2-1 to 2-5), the obtained rubber had significantly superior mechanical properties, such as rolling resistance, product of tensile strength at break and elongation strength at break, tear, and stiffness.

In Example 1-1, the initiator was stored in the cooling environment and used for polymerization later, while in Example 2-2, the initiator was freshly prepared right before the polymerization. The composition and physical properties of the conjugated diene-based polymers obtained in Example 1-1 and Example 2-2 are almost identical, and the rubber made therefrom had significantly superior mechanical properties to the rubber made from the polymers obtained in Comparative Examples 1 to 4. Compared with Example 2-2, the reaction time of polymerization in Example 1-1 is shorter and the yield increases.

**Table 3**

| Composition and physical properties of conjugated diene-based polymers | | | | |
|---|---|---|---|---|
| | Comparative Example 5 | Example 3-1 | Example 3-2 | Example 3-3 |
| Butadiene content (%) | 90 | | | |
| Styrene content (%) | 10 | | | |
| Vinyl content (%) | 41 | 41 | 42 | 41 |
| Q/M¹ | 0.5 | 1.3 | 1.3 | 1.5 |
| Si/M² | 2.7 | 1.6 | 2.5 | 2.0 |
| Mooney Viscosity (ML₁₊₄100°C) | 66 | 48 | 42 | 71 |
| Glass transition temperature (°C) | -60 | -62 | -61 | -57 |

| Mechanical properties of rubber test pieces | | | | |
|---|---|---|---|---|
| Rolling resistance | 100 | 117 | 118 | 119 |
| Abrasion test | 100 | 109 | 112 | 111 |

| | | | | |
|---|---|---|---|---|
| ¹Molar ratio of 1,3-diisopropenylbenzene to effective active n-butyllithium ² Molar ratio of 4-{3-[dimethoxy(methyl)silyl]propyl}morpholine to effective active n-butyllithium | | | | |

Table 3 shows various properties of the conjugated diene-based polymers of Examples 3-1 to 3-3 and the rubber test pieces made therefrom. In Examples 3-1 to 3-3, both 1,3-diisopropenylbenzene and 4-{3-[dimethoxy(methyl)silyl]propyl}morpholine were added, and the Q/M values and Si/M values were both in the range of the present invention (i.e., 1.3 ~ 5.0). In Comparative Example 5, with the addition of both 1,3-diisopropenylbenzene and 4-{3-[dimethoxy(methyl)silyl]propyl}morpholine, the Si/M value, but not the Q/M value, of Comparative Example 5 was in the range of the present invention. Compared with Comparative Example 5, Examples 3-1 to 3-3 all show that with the addition of 1,3-diisopropenylbenzene to the extent that the Q/M value was at the bottom of the range (i.e., 1.3) without affecting the glass transition temperatures of the polymers, the rubber made from the polymers obtained from Examples 3-1 to 3-3 has significantly superior mechanical properties, such as rolling resistance and abrasion.

The Q/M values and Si/M values of the polymers obtained in Example 2-1 and Example 3-2 were very close, which were all in the range of the present invention. More styrene was used in Example 2-1 (the weight ratio of butadiene to styrene was 78/22), which resulted in a higher glass transition temperature of the polymer (-24°C), and the rubber made therefrom is suitable for use in the summer. In contrast, more 1,3-butadiene was used in Example 3-2 (the weight ratio of butadiene to styrene was 90/10), which resulted in a lower glass transition temperature of the polymer (-61°C), and the rubber made therefrom is suitable for use in the winter. The rubber made from the polymer obtained in Example 2-1 has various significantly superior mechanical properties to the rubber made from the polymers obtained in Comparative Examples 1 to 4. In addition, the rubber made from the polymer obtained in Example 3-2 has various significantly superior mechanical properties to the rubber made from the polymers obtained in Comparative Example 5. Compared with Example 2-1, in Example 3-2, the reaction time of n-butyllithium was reduced during the preparation of the initiator by increasing the temperature so the yield increased.

## Claims

1. A method of manufacturing conjugated diene-based polymers, comprising:
step (a): reacting a divinylarene-like compound represented by formula (1) with an organic alkali metal to obtain an initiator, wherein A and B are CₙH₂ₙ₊₁ or an aromatic ring, n is 0~5, A and B can be the same or different, Q is an aromatic ring, and wherein the molar ratio of the divinylarene-like compound to the effective active organic alkali metal is 1.3~5.0; 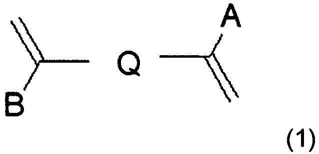
step (b): polymerizing a conjugated diene monomer or a conjugated diene monomer and a vinyl aromatic monomer using the initiator to obtain the conjugated diene-based polymers; and
step (c): adding a silicon-containing modifier after step (b),
wherein the molar ratio of the silicon-containing modifier to the effective active organic alkali metal is 1.3 ~5.0.

2. The method of manufacturing conjugated diene-based polymers according to claim 1, wherein the divinylarene-like compound is 1,3-diisopropenylbenzene or p-divinylbenzene.

3. The method of manufacturing conjugated diene-based polymers according to claim 1, wherein step (a) further comprises: reacting a part of the divinylarene-like compound with the organic alkali metal for a first period of time, and adding the remaining part of the divinylarene-like compound to react for a second period of time.

4. The method of manufacturing conjugated diene-based polymers according to claim 1, wherein step (a) further comprises: making the concentration of the divinylarene-like compound in a solvent be 0.001-20 wt%.

5. The method of manufacturing conjugated diene-based polymers according to claim 1, wherein step (a) further comprises: raising the temperature to 55°C ~ 60°C to perform the reaction.

6. The method of manufacturing conjugated diene-based polymers according to claim 1, further comprising: adding a cyclic ether and/or diether compound in step (b).

7. The method of manufacturing conjugated diene-based polymers according to claim 1, wherein step (a) further comprises: adding a cyclic ether and/or diether compound to mix with the divinylarene-like compound before adding the organic alkali metal.

8. The method of manufacturing conjugated diene-based polymers according to claim 1, wherein the silicon-containing modifier is represented by formula (2): 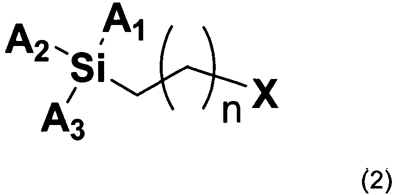 wherein A₁, A₂ and A₃ are alkanes, alkoxys or halogens, the carbon number of alkanes or alkoxys is C1-C5, at least two of A₁, A₂ and A₃ are alkoxys or halogens, X is a group containing at least one of nitrogen, oxygen, sulfur, and phosphorus atoms, and n is 1-10.

9. The method of manufacturing conjugated diene-based polymers according to claim 8, wherein the silicon-containing modifier is 4-{3-[dimethoxy(methyl)silyl]propyl}morpholine or 3-(trimethoxysilyl)-N,N-dimethyl-propan-1-amine.

10. The method of manufacturing conjugated diene-based polymers according to claim 8, wherein step (c) further comprises: the molar ratio of the silicon-containing modifier to the effective active organic alkali metal is 1.4 ~3.5.

11. The method of manufacturing conjugated diene-based polymers according to claim 8, wherein step (c) further comprises: the molar ratio of the silicon-containing modifier to the effective active organic alkali metal is 1.5 ~2.5.

12. A conjugated diene-based polymer obtained by the manufacturing method according to any one of claims 1 to 11.

13. A rubber, comprising the conjugated diene-based polymer according to claim 12.

14. A tire containing the rubber according to claim 13.

## Patentansprüche

1. Verfahren zur Herstellung von Polymeren auf Basis konjugierter Diene, umfassend:
Schritt (a): Umsetzen einer divinylarenähnlichen Verbindung der Formel (1) mit einem organischen Alkalimetall, um einen Initiator zu erhalten, wobei A und B CₙH₂ₙ₊₁ oder ein aromatischer Ring sind, n 0 bis 5 ist, A und B gleich oder unterschiedlich sein können, Q ein aromatischer Ring ist und wobei das Molverhältnis der divinylarenähnlichen Verbindung zu dem wirksamen aktiven organischen Alkalimetall 1,3 bis 5,0 beträgt; 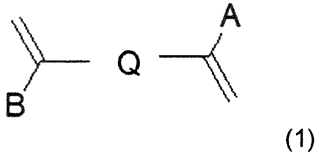
Schritt (b): Polymerisieren eines konjugierten Dienmonomers oder eines konjugierten Dienmonomers und eines vinylaromatischen Monomers unter Verwendung des Initiators, um die Polymere auf Basis konjugierter Diene zu erhalten; und
Schritt (c): Hinzufügen eines siliciumhaltigen Modifikators nach Schritt (b), wobei das Molverhältnis des siliciumhaltigen Modifikators zum wirksamen aktiven organischen Alkalimetall 1,3 bis 5,0 beträgt.

2. Verfahren zur Herstellung von Polymeren auf Basis konjugierter Diene gemäß Anspruch 1, wobei die divinylarenähnliche Verbindung 1,3-Diisopropenylbenzol oder p-Divinylbenzol ist.

3. Verfahren zur Herstellung von Polymeren auf Basis konjugierter Diene gemäß Anspruch 1, wobei Schritt (a) ferner umfasst: Umsetzen eines Teils der divinylarenartigen Verbindung mit dem organischen Alkalimetall während einer ersten Zeitspanne und Zugabe des restlichen Teils der divinylarenartigen Verbindung zur Umsetzung während einer zweiten Zeitspanne.

4. Verfahren zur Herstellung von Polymeren auf Basis konjugierter Diene gemäß Anspruch 1, wobei Schritt (a) ferner umfasst: Einstellen der Konzentration der divinylarenartigen Verbindung in einem Lösungsmittel auf 0,001 bis 20 Gew.-%.

5. Verfahren zur Herstellung von Polymeren auf Basis konjugierter Diene gemäß Anspruch 1, wobei Schritt (a) ferner umfasst: Erhöhen der Temperatur auf 55 °C bis 60 °C, um die Reaktion durchzuführen.

6. Verfahren zur Herstellung von Polymeren auf Basis konjugierter Diene gemäß Anspruch 1, ferner umfassend: Zugabe einer cyclischen Ether- und/oder Dietherverbindung in Schritt (b).

7. Verfahren zur Herstellung von Polymeren auf Basis konjugierter Diene gemäß Anspruch 1, wobei Schritt (a) ferner umfasst: Zugabe einer cyclischen Ether- und/oder Dietherverbindung zum Mischen mit der divinylarenartigen Verbindung vor der Zugabe des organischen Alkalimetalls.

8. Verfahren zur Herstellung von Polymeren auf Basis konjugierter Diene gemäß Anspruch 1, wobei der siliciumhaltige Modifikator durch die Formel (2) dargestellt wird: 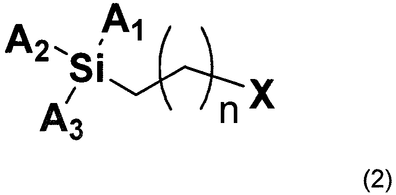 wobei A₁, A₂ und A₃ Alkane, Alkoxygruppen oder Halogene sind, die Kohlenstoffzahl der Alkane oder Alkoxygruppen C1-C5 beträgt, mindestens zwei der Gruppen A₁, A₂ und A₃ Alkoxygruppen oder Halogene sind, X eine Gruppe ist, die mindestens eines der Atome Stickstoff, Sauerstoff, Schwefel und Phosphor enthält, und n 1-10 ist.

9. Verfahren zur Herstellung von Polymeren auf Basis konjugierter Diene gemäß Anspruch 8, wobei der siliciumhaltige Modifikator 4-{3-[Dimethoxy(methyl)silyl]propyl}morpholin oder 3-(Trimethoxysilyl)-N,N-dimethyl-propan-1-amin ist.

10. Verfahren zur Herstellung von Polymeren auf Basis konjugierter Diene gemäß Anspruch 8, wobei Schritt (c) ferner umfasst: das Molverhältnis des siliciumhaltigen Modifikators zum wirksamen aktiven organischen Alkalimetall beträgt 1,4 bis 3,5.

11. Verfahren zur Herstellung von Polymeren auf Basis konjugierter Diene gemäß Anspruch 8, wobei Schritt (c) ferner umfasst: das Molverhältnis des siliciumhaltigen Modifikators zum wirksamen aktiven organischen Alkalimetall beträgt 1,5 bis 2,5.

12. Ein Polymer auf Basis konjugierter Diene, das durch das Herstellungsverfahren gemäß einem der Ansprüche 1 bis 11 erhalten wird.

13. Ein Kautschuk, der das Polymer auf Basis konjugierter Diene gemäß Anspruch 12 umfasst.

14. Ein Reifen, der den Kautschuk gemäß Anspruch 13 enthält.

## Revendications

1. Procédé de préparation de polymères à base de diènes conjugués, comprenant :
étape (a) : la réaction d'un composé de type divinylarène représenté par la formule (1) avec un métal alcalin organique pour l'obtention d'un initiateur, A et B représentant CₙH₂ₙ₊₁ ou un cycle aromatique, n représentant 0 ~ 5, A et B pouvant être identiques ou différents, Q représentant un cycle aromatique et le rapport molaire du composé de type divinylarène au métal alcalin organique actif efficace étant de 1,3 ~ 5,0 ; 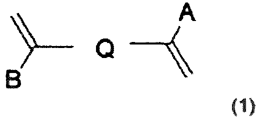
étape (b) : la polymérisation d'un monomère diénique conjugué ou d'un monomère diénique conjugué et d'un monomère aromatique de vinyle à l'aide de l'initiateur pour l'obtention de polymères à base de diènes conjugués ; et
étape (c) : l'ajout d'un modificateur contenant du silicium après l'étape (b), le rapport molaire du modificateur contenant du silicium au métal alcalin organique actif efficace étant de 1,3 ~ 5,0.

2. Procédé de préparation de polymères à base de diènes conjugués selon la revendication 1, le composé de type divinylarène étant le 1,3-diisopropénylbenzène ou le p-divinylbenzène.

3. Procédé de préparation de polymères à base de diènes conjugués selon la revendication 1, l'étape (a) comprenant en outre : la réaction d'une partie du composé de type divinylarène avec le métal alcalin organique pendant une première période de temps et l'ajout de la partie résiduelle du composé de type divinylarène pour une réaction pendant une seconde période de temps.

4. Procédé de préparation de polymères à base de diènes conjugués selon la revendication 1, l'étape (a) comprenant en outre : l'ajustement de la concentration en composé de type divinylarène dans un solvant à 0,001 - 20% en poids.

5. Procédé de préparation de polymères à base de diènes conjugués selon la revendication 1, l'étape (a) comprenant en outre : l'élévation de la température à 55°C ~ 60°C pour la mise en œuvre de la réaction.

6. Procédé de préparation de polymères à base de diènes conjugués selon la revendication 1, comprenant en outre : l'ajout d'un composé éther et/ou diéther cyclique dans l'étape (b).

7. Procédé de préparation de polymères à base de diènes conjugués selon la revendication 1, l'étape (a) comprenant en outre : l'ajout d'un composé éther et/ou diéther cyclique au mélange comportant le composé de type divinylarène avant l'ajout du métal alcalin organique.

8. Procédé de préparation de polymères à base de diènes conjugués selon la revendication 1, le modificateur contenant du silicium étant représenté par la formule (2) : 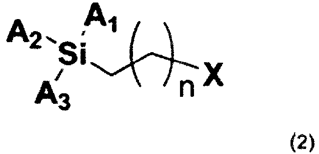 dans laquelle A₁, A₂ et A₃ représentent des radicaux alcane, alcoxy ou halogène, le nombre de carbones des radicaux alcane ou alcoxy est de C1-C5, au moins deux radicaux parmi A₁, A₂ et A₃ sont des radicaux alcoxy ou halogène, X représente un groupe contenant au moins un atome parmi les atomes d'azote, d'oxygène, de soufre et de phosphore et n représente 1-10.

9. Procédé de préparation de polymères à base de diènes conjugués selon la revendication 8, le modificateur contenant du silicium étant la 4-{3-[diméthoxy(méthyl)silyl]propyl}morpholine ou la 3-(triméthoxysilyl)-N,N-diméthyl-propan-1-amine.

10. Procédé de préparation de polymères à base de diènes conjugués selon la revendication 8, l'étape (c) comprenant en outre : le rapport molaire du modificateur contenant du silicium au métal alcalin organique actif efficace étant de 1,4 ~ 3,5.

11. Procédé de préparation de polymères à base de diènes conjugués selon la revendication 8, l'étape (c) comprenant en outre : le rapport molaire du modificateur contenant du silicium au métal alcalin organique actif efficace étant de 1,5 ~ 2,5.

12. Polymère à base de diènes conjugués obtenu par le procédé de préparation selon l'une quelconque des revendications 1 à 11.

13. Caoutchouc, comprenant le polymère à base de diènes conjugués selon la revendication 12.

14. Pneumatique contenant le caoutchouc selon la revendication 13.
